# FASCICULE DE BREVET EUROPEEN

(11) **EP 3 697 276 B1**
(45) Date de publication et mention de la délivrance du brevet: **13.04.2022**
(21) Numéro de dépôt: 18803737.8
(22) Date de dépôt: 12.10.2018
(51) Int. Cl.: A47J 37/12

(54) **APPAREIL ÉLECTRIQUE DE CUISSON COMPORTANT UN SUPPORT DE VIDANGE AVEC COUVERCLE**
ELEKTRISCHES KOCHGERÄT MIT EINEM ABFLUSSSTUTZEN MIT EINEM DECKEL
ELECTRICAL COOKING APPLIANCE HAVING A DRAINING SUPPORT WITH A LID

(30) Priorité: 16.10.2017 FR 1759688
(43) Date de publication de la demande: 26.08.2020
(73) Titulaire: SEB S.A., 69130 Ecully (FR)
(72) Inventeur: DIRAND, Pascal, 21160 Marsannay-la-Côte (FR); SARTOUT, Pierre, 21000 Dijon (FR); SEURAT, Frédéric, 21490 Bretigny (FR)
(74) Mandataire: SEB Développement
(86) Numéro de dépôt international: PCT/FR2018/052545
(87) Numéro de publication internationale: WO 2019/077242

(56) Documents cités:
- EP-A1- 1 504 705
- EP-A1- 2 103 240
- EP-B1- 1 504 705
- EP-B1- 2 103 240

## Description

La présente invention concerne le domaine technique des appareils électriques de cuisson comportant une cuve apte à recevoir un bain de cuisson.

La présente invention concerne plus particulièrement les appareils électriques de cuisson comportant un ensemble de cuisson pouvant être disposé sur un support de vidange.

La présente invention concerne notamment, mais non exclusivement, les friteuses.

Il est connu du document EP1504705 un appareil électrique de cuisson comportant un ensemble de cuisson comprenant une cuve apte à recevoir un bain de cuisson, cet ensemble de cuisson pouvant être disposé sur un support de vidange formant un réceptacle de vidange. La cuve est munie d'un dispositif de vidange comprenant un clapet susceptible d'occuper une position de rappel stable fermée et une position ouverte. Le support de vidange comporte un organe de commande prévu pour amener le clapet en position ouverte lorsque le support de vidange porte l'ensemble de cuisson. Ainsi la mise en place de l'ensemble de cuisson sur le support de vidange permet de placer le clapet en position ouverte. Le bain de cuisson peut ainsi être transféré de la cuve dans le support de vidange via le dispositif de vidange. L'appareil comporte un couvercle pouvant être monté sur le support de vidange pour fermer le réceptacle de vidange.

Un inconvénient de la réalisation précitée réside dans le fait que le couvercle doit être préalablement retiré du support de vidange avant de pouvoir procéder au transfert du bain de cuisson de la cuve dans le réceptacle de vidange via le dispositif de vidange. Lors de la vidange du bain de cuisson des éclaboussures peuvent survenir, ces éclaboussures pouvant atteindre la partie inférieure de l'ensemble de cuisson disposé sur le support de vidange.

Un objet de la présente invention est de proposer un appareil électrique de cuisson dont la cuve présente un dispositif de vidange actionné par la mise en place de la cuve sur un support de vidange, dont l'utilisation reste simple tout en assurant une meilleure protection contre les éclaboussures lors de la vidange du contenu de la cuve dans le support de vidange.

Un autre objet de la présente invention est de proposer un appareil électrique de cuisson dont la cuve présente un dispositif de vidange actionné par la mise en place de la cuve sur un support de vidange, dont la construction reste simple tout en assurant une meilleure protection contre les éclaboussures lors de la vidange du contenu de la cuve dans le support de vidange.

Ces objets sont atteints avec un appareil électrique de cuisson, notamment friteuse électrique, comportant un ensemble de cuisson, un support de vidange formant un réceptacle de vidange, et un couvercle prévu pour être monté sur le support de vidange, l'appareil électrique de cuisson occupant une configuration de vidange dans laquelle le support de vidange porte l'ensemble de cuisson, l'ensemble de cuisson comprenant une cuve apte à recevoir un bain de cuisson, la cuve étant munie d'un dispositif de vidange comprenant un clapet susceptible d'occuper une position de rappel stable fermée et une position ouverte, un organe de commande amenant le clapet en position ouverte lorsque l'appareil électrique de cuisson occupe la configuration de vidange, du fait que lorsque l'appareil électrique de cuisson occupe la configuration de vidange, le couvercle est monté sur le support de vidange portant l'ensemble de cuisson, le couvercle ménageant un passage pour l'écoulement dans le réceptacle de vidange du bain de cuisson provenant du dispositif de vidange. Ces dispositions permettent de limiter l'ouverture de remplissage du support de vidange lors de la vidange du bain de cuisson dans le réceptacle de vidange. Ces dispositions permettent ainsi de réduire le risque d'éclaboussures hors de l'enceinte formée par le support de vidange et le couvercle.

Avantageusement alors, le dispositif de vidange s'étend dans le passage lorsque le couvercle est monté sur le support de vidange et que le support de vidange porte l'ensemble de cuisson. Cette disposition permet que le bain de cuisson s'écoule hors du dispositif de vidange dans l'enceinte formée par le support de vidange et le couvercle.

En alternative ou en complément, l'organe de commande peut s'étendre dans le passage lorsque le couvercle est monté sur le support de vidange et que le support de vidange porte l'ensemble de cuisson.

Avantageusement encore, le support de vidange présente une ou plusieurs zone(s) d'appui supérieure(s) portant l'ensemble de cuisson, la ou les zone(s) d'appui supérieure(s) étant agencée(s) autour du couvercle monté sur le support de vidange. Ainsi l'ensemble de cuisson peut reposer sur le support de vidange de manière annulaire autour du couvercle, ou en plusieurs points autour du couvercle. En alternative ou en complément, l'ensemble de cuisson peut reposer sur le couvercle porté par le support de vidange. Ainsi le support de vidange peut porter l'ensemble de cuisson directement ou indirectement.

Avantageusement alors, la ou les zone(s) d'appui supérieure(s) est/sont formée(s) autour du réceptacle de vidange. De préférence, la ou les zone(s) d'appui supérieure(s) entoure(nt) le réceptacle de vidange.

Avantageusement alors, la ou les zone(s) d'appui supérieure(s) est/sont formée(s) sur une collerette entourant le réceptacle de vidange. Cette disposition permet de rigidifier le support de vidange.

Avantageusement alors, la collerette présente une ou plusieurs parois de centrage maintenant latéralement l'ensemble de cuisson reposant sur la ou les zone(s) d'appui supérieure(s). Cette disposition permet de stabiliser l'ensemble de cuisson disposé sur le support de vidange.

Avantageusement encore, la collerette est prolongée par une jupe inférieure entourant le réceptacle de vidange. Cette disposition permet de protéger la paroi latérale du réceptacle de vidange.

Avantageusement alors, la jupe inférieure présente des échancrures inférieures. Cette disposition permet de faciliter la manipulation du support de vidange.

Avantageusement encore, une ou plusieurs zone(s) d'appui inférieure(s) est/sont agencée(s) sous le réceptacle de vidange. Cette disposition permet d'obtenir une surface d'appui inférieure importante.

Avantageusement encore, l'organe de commande est issu du réceptacle de vidange, de préférence du fond du réceptacle de vidange. Cette disposition permet de simplifier la construction du support de vidange et du couvercle. En alternative, l'organe de commande pourrait notamment appartenir au support de vidange sans nécessairement être issu du réceptacle de vidange, ou encore appartenir au couvercle.

Avantageusement encore, le couvercle présente une cheminée ménageant le passage. Cette disposition permet de rigidifier le couvercle. Cette disposition permet aussi de mieux exploiter le volume du réceptacle de vidange.

Avantageusement alors, l'organe de commande s'étend à l'intérieur de la cheminée lorsque le couvercle est monté sur le support de vidange et que le support de vidange porte l'ensemble de cuisson. Cette disposition permet de mieux exploiter le volume du réceptacle de vidange. Cette disposition permet aussi de réduire les risques d'éclaboussures.

Avantageusement encore, le dispositif de vidange s'étend à l'intérieur de la cheminée lorsque le couvercle est monté sur le support de vidange et que le support de vidange porte l'ensemble de cuisson. Cette disposition permet également de réduire les risques d'éclaboussures.

Avantageusement encore, l'appareil électrique de cuisson comporte un bouchon prévu pour fermer le passage. Cette disposition permet également d'améliorer la conservation du bain de cuisson dans le support de vidange fermé par le couvercle.

Avantageusement alors, le bouchon est monté mobile sur le couvercle entre une position de vidange dans laquelle le passage est libre et une position de conservation dans laquelle le passage est obturé par le bouchon. Cette disposition permet de simplifier l'utilisation du couvercle.

Avantageusement alors, le bouchon est monté pivotant sur le couvercle. Cette disposition permet de simplifier la construction du couvercle.

Avantageusement encore, le bouchon est porté par la cheminée. Cette disposition permet de simplifier la construction du couvercle.

Avantageusement encore, le couvercle ménage un logement recevant le bouchon en position de vidange lorsque le couvercle est monté sur le support de vidange et que le support de vidange porte l'ensemble de cuisson. Cette disposition permet de réduire l'encombrement de l'appareil.

L'invention sera mieux comprise à l'étude d'un exemple de réalisation, pris à titre nullement limitatif, illustré dans les figures annexées, dans lesquelles :
- la figure 1 est une vue en perspective d'un ensemble de cuisson appartenant à un exemple de réalisation d'un appareil électrique de cuisson selon l'invention,
- la figure 2 est une vue en perspective d'un support de vidange, d'un couvercle et d'un bouchon appartenant à l'appareil électrique de cuisson illustré sur la figure 1, le bouchon étant en position de vidange,
- la figure 3 est une vue en perspective latérale du couvercle et du bouchon illustré sur la figure 2, le bouchon étant en position de conservation,
- la figure 4 est une vue en perspective de dessous du couvercle illustré sur les figures 2 et 3,
- la figure 5 est une vue en élévation du support de vidange illustré sur la figure 2,
- la figure 6 est une vue en perspective du support de vidange illustré sur les figures 2 et 5,
- la figure 7 est une vue en perspective du support de vidange illustré sur les figures 2, 5 et 6, selon une autre orientation,
- la figure 8 est une vue de dessous d'un dispositif de vidange appartenant à l'ensemble de cuisson illustré sur la figure 1,
- la figure 9 est une vue en perspective d'une partie du couvercle et du bouchon illustrés sur les figures 2, 3 et 4, le bouchon étant représenté en position de vidange,
- la figure 10 est une vue en élévation et en coupe de l'appareil électrique de cuisson occupant une configuration de vidange dans laquelle le support de vidange illustré sur la figure 2 porte l'ensemble de cuisson illustré sur la figure 1.

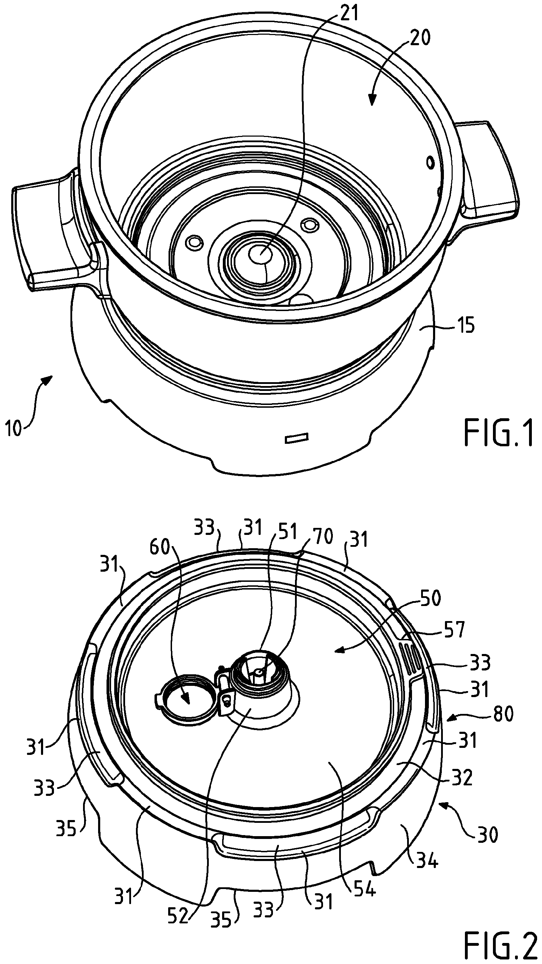

L'appareil électrique de cuisson 1 illustré sur les figures 1 à 10 est une friteuse électrique comportant un ensemble de cuisson 10 représenté sur la figure 1 et un socle de vidange 80 représenté sur la figure 2.

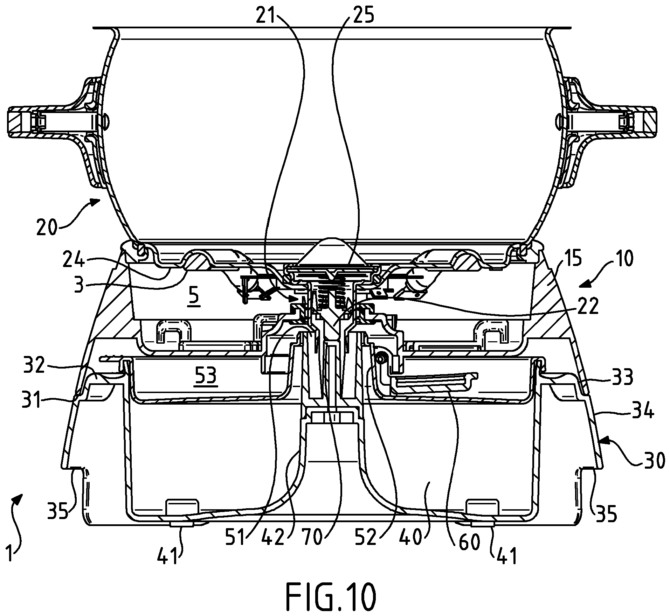

Tel que visible sur les figures 1 et 10, l'ensemble de cuisson 10 comprend une cuve 20 apte à recevoir un bain de cuisson. L'ensemble de cuisson 10 comporte une embase 15 agencée sous une partie inférieure 24 de la cuve 20, tel que mieux visible sur la figure 10.

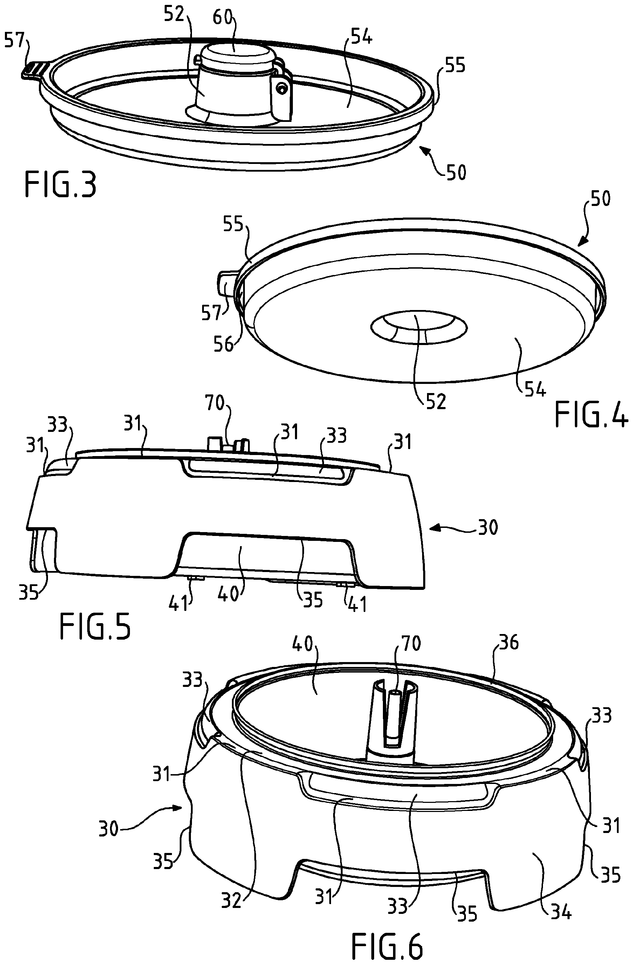

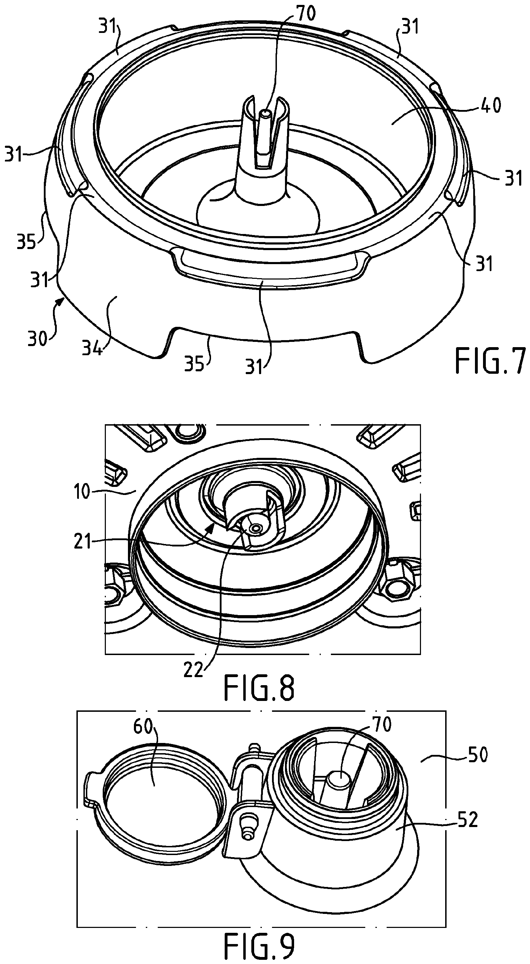

Le socle de vidange 80 comprend un support de vidange 30, représenté sur les figures 2, 5, 6, et 7, un couvercle 50, représenté sur les figures 2, 3, 4 et 9, et un bouchon 60, représenté sur les figures 2, 3 et 9. Le support de vidange 30 forme un réceptacle de vidange 40, tel que mieux visible sur les figures 6 et 7.

Le couvercle 50 est prévu pour être monté sur le support de vidange 30, tel qu'illustré sur la figure 2.

Le couvercle 50 présente une cheminée 52 s'élevant au-dessus d'une paroi d'obturation 54, tel que visible sur la figure 3. La paroi d'obturation 54 est entourée par une bordure périphérique 55 présentant un logement inférieur 56, tel que mieux visible sur la figure 4. La bordure périphérique 55 présente une languette externe 57 destinée à faciliter le retrait du couvercle 50 du support de vidange 30.

Le couvercle 50 ménage un passage 51 pour l'écoulement du bain de cuisson dans le support de vidange 30 lorsque le support de vidange 30 porte l'ensemble de cuisson 10. Ainsi lorsque le couvercle 50 est monté sur le support de vidange 30, le couvercle 50 ferme le réceptacle de vidange 40, à l'exception du passage 51. Plus particulièrement dans l'exemple de réalisation illustré sur les figures, la cheminée 52 ménage le passage 51.

Le bouchon 60 est prévu pour fermer le passage 51. Dans l'exemple de réalisation illustré sur les figures, le bouchon 60 est monté mobile sur le couvercle 50 entre une position de vidange, représentée sur les figures 2 et 10 dans laquelle le passage 51 est libre, et une position de conservation, représentée sur la figure 3, dans laquelle le passage 51 est obturé par le bouchon 60. Plus particulièrement dans l'exemple de réalisation illustré sur les figures, le bouchon 60 est monté pivotant sur le couvercle 50. Le bouchon 60 est porté par la cheminée 52. Tel que visible sur la figure 10, le couvercle 50 ménage un logement 53 recevant le bouchon 60 en position de vidange lorsque le couvercle 50 est monté sur le support de vidange 30 et que le support de vidange 30 porte l'ensemble de cuisson 10.

Le support de vidange 30 présente plusieurs zones d'appui supérieures 31 prévues pour porter l'ensemble de cuisson 10. Tel que bien visible sur la figure 2, les zones d'appui supérieures 31 sont agencées autour du couvercle 50 monté sur le support de vidange 30. Les zones d'appui supérieures 31 sont formées autour du réceptacle de vidange 40.

Plus particulièrement dans l'exemple de réalisation illustré sur les figures, les zones d'appui supérieures 31 sont formées sur une collerette 32 entourant le réceptacle de vidange 40. Les zones d'appui supérieures 31 sont agencées selon plusieurs niveaux sur la collerette 32. La collerette 32 présente plusieurs parois de centrage 33 prévues pour maintenir latéralement l'ensemble de cuisson 10 reposant sur les zones d'appui supérieures 31. Chaque paroi de centrage 33 est adjacente à l'une des zones d'appui supérieures 31. La collerette 32 est prolongée par une jupe inférieure 34 entourant le réceptacle de vidange 40. La jupe inférieure 34 présente des échancrures inférieures 35. Le support de vidange 30 présente une nervure 36 s'étendant entre la collerette 32 et le réceptacle de vidange 40. La nervure 36 entoure le réceptacle de vidange 40. Ainsi la nervure 36 est annulaire. La nervure 36 forme le bord supérieur du réceptacle de vidange 40.

Le support de vidange 30 présente des zones d'appui inférieures 41. Dans l'exemple de réalisation illustré sur les figures, les zones d'appui inférieures 41 sont agencées sous le réceptacle de vidange 40. Le réceptacle de vidange 40 présente par exemple trois zones d'appui inférieures 41 réparties en périphérie du fond du réceptacle de vidange 40.

La cuve 20 est munie d'un dispositif de vidange 21, visible sur les figures 8 et 10. Le dispositif de vidange 21 comprend un clapet 22. L'appareil électrique de cuisson 1 comporte un organe de commande 70 prévu pour actionner le clapet 22, visible sur les figures 2, 5, 6, 7, 9 et 10. Le clapet 22 est susceptible d'occuper une position de rappel stable fermée, en l'absence d'action extérieure, pour contenir le bain de cuisson dans la cuve 20, et une position ouverte, pour permettre la vidange du bain de cuisson, lorsque le clapet 22 est repoussé par l'organe de commande 70, tel que représenté sur la figure 10. Si désiré un clapet thermostatique 25 peut être agencé en amont du clapet 22, pour empêcher la vidange du bain de cuisson si la température de cuisson est trop élevée.

Dans l'exemple de réalisation illustré sur les figures, l'organe de commande 70 est issu du réceptacle de vidange 40, plus particulièrement du fond du réceptacle de vidange 40. Tel que mieux visible sur la figure 10, le fond du réceptacle de vidange 40 présente une protubérance 42. L'organe de commande 70 est formé par une pièce rapportée montée sur la protubérance 42. L'organe de commande 70 est agencé en position centrale dans le réceptacle de vidange 40.

L'appareil électrique de cuisson 1 comporte un dispositif de chauffage électrique 3 associé à la cuve 20. La cuve 20 est assemblée avec l'embase 15 pour former une chambre 5 logeant au moins une partie du dispositif de chauffage électrique 3. Dans l'exemple de réalisation illustré sur les figures, la chambre 5 loge le dispositif de chauffage électrique 3. Tel que mieux visible sur la figure 10, le dispositif de chauffage électrique 3 est fixé sous la partie inférieure 24 de la cuve 20. Le dispositif de chauffage électrique 3 s'étend ainsi sous la partie inférieure 24 de la cuve 20. Plus particulièrement dans l'exemple de réalisation illustré sur les figures, le dispositif de chauffage électrique 3 est réalisé sous la forme d'un élément chauffant blindé. La chambre 5 loge également les connexions électriques du dispositif de chauffage électrique 3. La chambre 5 peut loger aussi un dispositif de contrôle de la température et un dispositif de sécurité thermique. Le dispositif de contrôle de la température est par exemple un thermostat. Le dispositif de sécurité thermique est par exemple un fusible thermique ou un limiteur thermique réarmable. A titre de variante, le dispositif de chauffage électrique 3 peut notamment s'étendre en partie à l'intérieur de la cuve 20, ou encore être agencé dans la chambre 5 sans nécessairement être fixé sous la partie intérieure 24 de la cuve 20.

L'appareil électrique de cuisson 1 illustré sur les figures fonctionne et s'utilise de la manière suivante.

L'appareil électrique de cuisson 1 peut occuper une configuration de vidange dans laquelle le support de vidange 30 porte l'ensemble de cuisson 10, tel que représenté sur la figure 10. Pour atteindre cette configuration de vidange, l'utilisateur soulève l'ensemble de cuisson 10 et pose l'ensemble de cuisson 10 sur le support de vidange 30.

Pour bénéficier des avantages de l'invention, l'utilisateur a préalablement disposé le couvercle 50 sur le support de vidange 30. Ainsi dans la configuration de vidange, le couvercle 50 est monté sur le support de vidange 30 portant l'ensemble de cuisson 10. Le logement inférieur 56 du couvercle 50 est alors monté sur la nervure 36 du support de vidange 30. L'utilisateur peut laisser le bouchon 60 en position de vidange sur le couvercle 50, tel que représenté sur la figure 10, pour laisser libre le passage 51, le passage 51 étant utilisé pour l'écoulement dans le réceptacle de vidange 40 du bain de cuisson provenant du dispositif de vidange 21.

Dans la configuration de vidange, l'ensemble de cuisson 10 est porté par le support de vidange 30. Toutefois l'ensemble de cuisson 10 ne repose pas nécessairement directement sur le support de vidange 30. A titre de variante, l'ensemble de cuisson 10 peut notamment reposer sur le couvercle 50 reposant sur le support de vidange 30.

Dans la configuration de vidange, l'organe de commande 70 amène le clapet 22 en position ouverte. Ainsi le positionnement de l'ensemble de cuisson 10 sur le support de vidange 30 suffit pour placer le clapet 22 en position ouverte.

Le réceptacle de vidange 40 est prévu pour recevoir le bain de cuisson s'écoulant du clapet 22 lorsque l'appareil électrique de cuisson 1 occupe la configuration de vidange. Dans l'exemple de réalisation illustré sur les figures, le dispositif de vidange 21 s'étend dans le passage 51 lorsque le couvercle 50 est monté sur le support de vidange 30 et que le support de vidange 30 porte l'ensemble de cuisson 10.

Plus particulièrement, le dispositif de vidange 21 s'étend à l'intérieur de la cheminée 52 lorsque le couvercle 50 est monté sur le support de vidange 30 et que le support de vidange 30 porte l'ensemble de cuisson 10, tel que représenté sur la figure 10. L'organe de commande 70 s'étend à l'intérieur de la cheminée 52 lorsque le couvercle 50 est monté sur le support de vidange 30 et que le support de vidange 30 porte l'ensemble de cuisson 10.

Ainsi le bain de cuisson s'écoulant de la cuve 20 par le dispositif de vidange 21 s'écoule dans l'enceinte formée par le couvercle 50 et le réceptacle de vidange 40, ce qui permet de limiter les éclaboussures.

Lorsque la vidange a été réalisée, l'utilisateur peut retirer l'ensemble de cuisson 10 du support de vidange 30 et placer le bouchon 60 en position de conservation sur le couvercle 50 pour obturer le passage 51.

A titre de variante, l'organe de commande 70 n'est pas nécessairement formé par une pièce rapportée sur le support de vidange 30, notamment sur le réceptacle de vidange 40. L'organe de commande 70 pourrait notamment être formé intégralement avec le support de vidange 30, notamment avec le réceptacle de vidange 40.

A titre de variante, l'organe de commande 70 n'est pas nécessairement issu du réceptacle de vidange 40. L'organe de commande 70 pourrait notamment être issu du support de vidange 30, par exemple entre la ou les zone(s) d'appui supérieures 31 et le réceptacle de vidange 40. L'organe de commande 70 pourrait aussi être issu du couvercle 50. De préférence alors le support de vidange 30 porte le couvercle 50 sous l'organe de commande 70 ou à proximité de l'organe de commande 70, pour que l'organe de commande 70 puisse déplacer le clapet de vidange 22 en évitant que le couvercle 50 soit soumis à des efforts importants et/ou à des déformations importantes.

A titre de variante le support de vidange 30 pourrait notamment présenter une zone d'appui supérieure 31, annulaire ou non, ou plusieurs zones d'appui supérieures 31, pour porter l'ensemble de cuisson 10.

A titre de variante le support de vidange 30 pourrait notamment présenter une paroi de centrage 33, annulaire ou non, ou plusieurs parois de centrage 33, pour centrer l'ensemble de cuisson 10 sur le support de vidange 30.

A titre de variante le support de vidange 30 pourrait notamment présenter une zone d'appui inférieure 41, annulaire ou non, ou plusieurs zones d'appui inférieures 41, pour porter l'ensemble de cuisson 10. La ou les zone(s) d'appui inférieure(s) 41 n'est/ne sont pas nécessairement agencée(s) sous le réceptacle de vidange 40, mais pourrai(en)t par exemple être agencée(s) sous la jupe inférieure 34.

La présente invention n'est nullement limitée à l'exemple de réalisation décrit et à ses variantes, mais englobe de nombreuses modifications dans le cadre des revendications.

## Revendications

1. Appareil électrique de cuisson (1), notamment friteuse électrique, comportant un ensemble de cuisson (10), un support de vidange (30) formant un réceptacle de vidange (40), et un couvercle (50) prévu pour être monté sur le support de vidange (30), l'appareil électrique de cuisson (1) occupant une configuration de vidange dans laquelle le support de vidange (30) porte l'ensemble de cuisson (10), l'ensemble de cuisson (10) comprenant une cuve (20) apte à recevoir un bain de cuisson, la cuve (20) étant munie d'un dispositif de vidange (21) comprenant un clapet (22) susceptible d'occuper une position de rappel stable fermée et une position ouverte, un organe de commande (70) amenant le clapet (22) en position ouverte lorsque l'appareil électrique de cuisson (1) occupe la configuration de vidange, **caractérisé en ce que** lorsque l'appareil électrique de cuisson (1) occupe la configuration de vidange, le couvercle (50) est monté sur le support de vidange (30) portant l'ensemble de cuisson (10), le couvercle (50) ménageant un passage (51) pour l'écoulement dans le réceptacle de vidange (40) du bain de cuisson provenant du dispositif de vidange (21).

2. Appareil électrique de cuisson (1) selon la revendication 1, **caractérisé en ce que** l'ensemble de cuisson (10) comporte une embase (15) agencée sous une partie inférieure (24) de la cuve (20) et **en ce que** lorsque l'appareil électrique de cuisson (1) occupe la configuration de vidange, le couvercle (50) est monté sur le support de vidange (30) portant l'embase (15) de l'ensemble de cuisson (10).

3. Appareil électrique de cuisson (1) selon l'une des revendications 1 ou 2, **caractérisé en ce que** lorsque le couvercle (50) est monté sur le support de vidange (30), le couvercle (50) ferme le réceptacle de vidange (40), à l'exception du passage (51).

4. Appareil électrique de cuisson (1) selon l'une des revendications 1 à 3, **caractérisé en ce que** le dispositif de vidange (21) s'étend dans le passage (51) lorsque le couvercle (50) est monté sur le support de vidange (30) et que le support de vidange (30) porte l'ensemble de cuisson (10).

5. Appareil électrique de cuisson (1) selon l'une des revendications 1 à 4, **caractérisé en ce que** le support de vidange (30) présente une ou plusieurs zone(s) d'appui supérieure(s) (31) portant l'ensemble de cuisson (10), et **en ce que** la ou les zone(s) d'appui supérieure(s) (31) est/sont agencée(s) autour du couvercle (50) monté sur le support de vidange (30).

6. Appareil électrique de cuisson (1) selon la revendication 5, **caractérisé en ce que** la ou les zone(s) d'appui supérieure(s) (31) est/sont formée(s) autour du réceptacle de vidange (40).

7. Appareil électrique de cuisson (1) selon la revendication 6, **caractérisé en ce que** la ou les zone(s) d'appui supérieure(s) (31) est/sont formée(s) sur une collerette (32) entourant le réceptacle de vidange (40).

8. Appareil électrique de cuisson (1) selon la revendication 7, **caractérisé en ce que** la collerette (32) présente une ou plusieurs paroi(s) de centrage (33) maintenant latéralement l'ensemble de cuisson (10) reposant sur la ou les zone(s) d'appui supérieure(s) (31).

9. Appareil électrique de cuisson (1) selon l'une des revendications 7 ou 8, **caractérisé en ce que** la collerette (32) est prolongée par une jupe inférieure (34) entourant le réceptacle de vidange (40).

10. Appareil électrique de cuisson (1) selon la revendication 9, **caractérisé en ce que** la jupe inférieure (34) présente des échancrures inférieures (35).

11. Appareil électrique de cuisson (1) selon l'une des revendications 1 à 10, **caractérisé en ce qu'**une ou plusieurs zone(s) d'appui inférieure(s) (41) est/sont agencée(s) sous le réceptacle de vidange (40).

12. Appareil électrique de cuisson (1) selon l'une des revendications 1 à 11, **caractérisé en ce que** l'organe de commande (70) est issu du réceptacle de vidange (40), de préférence du fond du réceptacle de vidange (40).

13. Appareil électrique de cuisson (1) selon l'une des revendications 1 à 12, **caractérisé en ce que** le couvercle (50) présente une cheminée (52) ménageant le passage (51).

14. Appareil électrique de cuisson (1) selon la revendication 13, **caractérisé en ce que** l'organe de commande (70) s'étend à l'intérieur de la cheminée (52) lorsque le couvercle (50) est monté sur le support de vidange (30) et que le support de vidange (30) porte l'ensemble de cuisson (10).

15. Appareil électrique de cuisson (1) selon l'une des revendications 13 ou 14, **caractérisé en ce que** le dispositif de vidange (21) s'étend à l'intérieur de la cheminée (52) lorsque le couvercle (50) est monté sur le support de vidange (30) et que le support de vidange (30) porte l'ensemble de cuisson (10).

16. Appareil électrique de cuisson (1) selon l'une des revendications 1 à 15, **caractérisé en ce qu'**il comporte un bouchon (60) prévu pour fermer le passage (51).

17. Appareil électrique de cuisson (1) selon la revendication 16, **caractérisé en ce que** le bouchon (60) est monté mobile sur le couvercle (50) entre une position de vidange dans laquelle le passage (51) est libre et une position de conservation dans laquelle le passage (51) est obturé par le bouchon (60).

18. Appareil électrique de cuisson (1) selon la revendication 17, **caractérisé en ce que** le bouchon (60) est monté pivotant sur le couvercle (50).

19. Appareil électrique de cuisson (1) selon l'une des revendications 17 ou 18, **caractérisé en ce que** le bouchon (60) est porté par la cheminée (52).

20. Appareil électrique de cuisson (1) selon l'une des revendications 17 à 19, **caractérisé en ce que** le couvercle (50) ménage un logement (53) recevant le bouchon (60) en position de vidange lorsque le couvercle (50) est monté sur le support de vidange (30) et que le support de vidange (30) porte l'ensemble de cuisson (10).

## Patentansprüche

1. Elektrische Kocheinrichtung (1), insbesondere elektrische Fritteuse, umfassend eine Kochanordnung (10), eine Ablaufhalterung (30), die einen Auffangbehälter (40) ausbildet, und einen Deckel (50), der dazu vorgesehen ist, auf der Ablaufhalterung (30) angebracht zu werden, wobei die elektrische Kocheinrichtung (1) eine Ablaufkonfiguration einnimmt, in der die Ablaufhalterung (30) die Kochanordnung (10) trägt, wobei die Kochanordnung (10) einen Behälter (20) umfasst, der geeignet ist, ein Kochbad aufzunehmen, wobei der Behälter (20) mit einer Ablaufvorrichtung (21) ausgestattet ist, die eine Klappe (22) umfasst, die imstande ist, eine geschlossene stabile Rückstellposition und eine offene Position einzunehmen, wobei ein Steuerelement (70) die Klappe (22) in die offene Position führt, wenn die elektrische Kocheinrichtung (1) die Ablaufkonfiguration einnimmt, **dadurch gekennzeichnet, dass** der Deckel (50) auf der Ablaufhalterung (30) angebracht ist, die die Kochanordnung (10) trägt, wenn die elektrische Kocheinrichtung (1) die Ablaufkonfiguration einnimmt, wobei der Deckel (50) einen Durchlass (51) zum Ablassen des aus der Ablaufvorrichtung (21) stammenden Kochbads in den Auffangbehälter (40) anordnet.

2. Elektrische Kocheinrichtung (1) nach Anspruch 1, **dadurch gekennzeichnet, dass** die Kochanordnung (10) eine Basis (15) umfasst, die unter einem unteren Teil (24) des Behälters (20) eingerichtet ist, und dadurch, dass der Deckel (50) auf der Ablaufhalterung (30), die die Basis (15) der Kochanordnung (10) trägt, angebracht ist, wenn die elektrische Kocheinrichtung (1) die Ablaufkonfiguration einnimmt.

3. Elektrische Kocheinrichtung (1) nach einem der Ansprüche 1 oder 2, **dadurch gekennzeichnet, dass** der Deckel (50) den Auffangbehälter (40) mit Ausnahme des Durchlasses (51) verschließt, wenn der Deckel (50) auf der Ablaufhalterung (30) angebracht ist.

4. Elektrische Kocheinrichtung (1) nach einem der Ansprüche 1 bis 3, **dadurch gekennzeichnet, dass** sich die Ablaufvorrichtung (21) in den Durchlass (51) erstreckt, wenn der Deckel (50) auf der Ablaufhalterung (30) angebracht ist, und dadurch, dass die Ablaufhalterung (30) die Kochanordnung (10) trägt.

5. Elektrische Kocheinrichtung (1) nach einem der Ansprüche 1 bis 4, **dadurch gekennzeichnet, dass** die Ablaufhalterung (30) einen oder mehrere obere(n) Auflagebereich(e) (31) aufweist, der (die) die Kochanordnung (10) trägt (tragen), und dadurch, dass der oder die obere(n) Auflagebereich(e) (31) um den auf der Ablaufhalterung (30) angebrachten Deckel (50) herum eingerichtet ist/sind.

6. Elektrische Kocheinrichtung (1) nach Anspruch 5, **dadurch gekennzeichnet, dass** der oder die obere(n) Auflagebereich(e) (31) um den Auffangbehälter (40) herum ausgebildet ist/sind.

7. Elektrische Kocheinrichtung (1) nach Anspruch 6, **dadurch gekennzeichnet, dass** der oder die obere(n) Auflagebereich(e) (31) auf einem Kragen (32), der den Auffangbehälter (40) umgibt, ausgebildet ist/sind.

8. Elektrische Kocheinrichtung (1) nach Anspruch 7, **dadurch gekennzeichnet, dass** der Kragen (32) eine oder mehrere Zentrierungswand/Zentrierungswände (33) umfasst, die die Kochanordnung (10), die auf dem oder den oberen Auflagebereich(en) (31) ruht, seitlich hält/halten.

9. Elektrische Kocheinrichtung (1) nach einem der Ansprüche 7 oder 8, **dadurch gekennzeichnet, dass** der Kragen (32) durch eine untere Schürze (34), die den Auffangbehälter (40) umgibt, verlängert ist.

10. Elektrische Kocheinrichtung (1) nach Anspruch 9, **dadurch gekennzeichnet, dass** die untere Schürze (34) untere Aussparungen (35) aufweist.

11. Elektrische Kocheinrichtung (1) nach einem der Ansprüche 1 bis 10, **dadurch gekennzeichnet, dass** ein oder mehrere untere(r) Auflagebereich(e) (41) unter dem Auffangbehälter (40) eingerichtet ist/sind.

12. Elektrische Kocheinrichtung (1) nach einem der Ansprüche 1 bis 11, **dadurch gekennzeichnet, dass** das Steuerelement (70) aus dem Auffangbehälter (40) hervorgeht, vorzugsweise aus dem Boden des Auffangbehälters (40).

13. Elektrische Kocheinrichtung (1) nach einem der Ansprüche 1 bis 12, **dadurch gekennzeichnet, dass** der Deckel (50) einen Abzug (52) aufweist, der den Durchlass (51) anordnet.

14. Elektrische Kocheinrichtung (1) nach Anspruch 13, **dadurch gekennzeichnet, dass** sich das Steuerelement (70) im Inneren des Abzugs (52) erstreckt, wenn der Deckel (50) auf der Ablaufhalterung (30) angebracht ist, und dadurch, dass die Ablaufhalterung (30) die Kochanordnung (10) trägt.

15. Elektrische Kocheinrichtung (1) nach einem der Ansprüche 13 oder 14, **dadurch gekennzeichnet, dass** sich die Ablaufvorrichtung (21) im Inneren des Abzugs (52) erstreckt, wenn der Deckel (50) auf der Ablaufhalterung (30) angebracht ist, und dadurch, dass die Ablaufhalterung (30) die Kochanordnung (10) trägt.

16. Elektrische Kocheinrichtung (1) nach einem der Ansprüche 1 bis 15, **dadurch gekennzeichnet, dass** sie einen Verschluss (60) umfasst, der dazu vorgesehen ist, den Durchlass (51) zu verschließen.

17. Elektrische Kocheinrichtung (1) nach Anspruch 16, **dadurch gekennzeichnet, dass** der Verschluss (60) zwischen einer Ablaufposition, bei der der Durchlass (51) frei ist, und einer Erhaltungsposition, bei der der Durchlass (51) durch den Verschluss (60) versperrt ist, beweglich auf dem Deckel (50) angebracht ist.

18. Elektrische Kocheinrichtung (1) nach Anspruch 17, **dadurch gekennzeichnet, dass** der Verschluss (60) drehbar auf dem Deckel (50) angebracht ist.

19. Elektrische Kocheinrichtung (1) nach einem der Ansprüche 17 oder 18, **dadurch gekennzeichnet, dass** der Verschluss (60) von dem Abzug (52) getragen wird.

20. Elektrische Kocheinrichtung (1) nach einem der Ansprüche 17 bis 19, **dadurch gekennzeichnet, dass** der Deckel (50) einen Sitz (53) anordnet, der den Deckel (60) in der Ablaufposition aufnimmt, wenn der Deckel (50) auf der Ablaufhalterung (30) angebracht ist, und dadurch, dass die Ablaufhalterung (30) die Kochanordnung (10) trägt.

## Claims

1. Electrical cooking appliance (1), in particular an electric fryer, comprising a cooking assembly (10), a draining support (30) forming a draining receptacle (40), and a lid (50) intended for being mounted on the draining support (30), the electrical cooking appliance (1) adopting a draining configuration in which the draining support (30) supports the cooking assembly (10), the cooking assembly (10) comprising a vessel (20) capable of receiving a cooking bath, the vessel (20) being provided with a draining device (21) comprising a valve (22) capable of adopting a closed stable return position and an open position, a control member (70) moving the valve (22) into the open position when the electrical cooking appliance (1) adopts the draining configuration, **characterised in that** when the electrical cooking appliance (1) adopts the draining configuration, the lid (50) is mounted on the draining support (30) supporting the cooking assembly (10), the lid (50) providing a passage (51) for the flow into the draining receptacle (40) of the cooking bath coming from the draining device (21).

2. Electrical cooking appliance (1) according to claim 1, **characterised in that** the cooking assembly (10) comprises a base (15) arranged under a lower part (24) of the vessel (20) and **in that** when the electrical cooking appliance (1) adopts the draining configuration, the lid (50) is mounted on the draining support (30) supporting the base (15) of the cooking assembly (10).

3. Electrical cooking appliance (1) according to one of claims 1 or 2, **characterised in that** when the lid (50) is mounted on the draining support (30), the lid (50) closes the draining receptacle (40), except for the passage (51).

4. Electrical cooking appliance (1) according to one of claims 1 to 3, **characterised in that** the draining device (21) extends into the passage (51) when the lid (50) is mounted on the draining support (30) and the draining support (30) supports the cooking assembly (10).

5. Electrical cooking appliance (1) according to one of claims 1 to 4, **characterised in that** the draining support (30) has one or more upper support zone(s) (31) supporting the cooking assembly (10), and **in that** the upper support zone(s) (31) is/are arranged around the lid (50) mounted on the draining support (30).

6. Electrical cooking appliance (1) according to claim 5, **characterised in that** the upper support zone(s) (31) is/are formed around the draining receptacle (40).

7. Electrical cooking appliance (1) according to claim 6, **characterised in that** the upper support zone(s) (31) is/are formed on a collar (32) surrounding the draining receptacle (40).

8. Electrical cooking appliance (1) according to claim 7, **characterised in that** the collar (32) has one or more centring wall(s) (33) laterally holding the cooking assembly (10) resting on the upper support zone(s) (31).

9. Electrical cooking appliance (1) according to one of claims 7 or 8, **characterised in that** the collar (32) is extended by a lower skirt (34) surrounding the draining receptacle (40).

10. Electrical cooking appliance (1) according to claim 9, **characterised in that** the lower skirt (34) has lower indentations (35).

11. Electrical cooking appliance (1) according to one of claims 1 to 10, **characterised in that** one or more lower support zone(s) (41) is/are arranged under the draining receptacle (40).

12. Electrical cooking appliance (1) according to one of claims 1 to 11, **characterised in that** the control member (70) comes from the draining receptacle (40), preferably from the bottom of the draining receptacle (40).

13. Electrical cooking appliance (1) according to one of claims 1 to 12, **characterised in that** the lid (50) has a funnel (52) providing the passage (51).

14. Electrical cooking appliance (1) according to claim 13, **characterised in that** the control member (70) extends inside the funnel (52) when the lid (50) is mounted on the draining support (30) and that the draining support (30) supports the cooking assembly (10).

15. Electrical cooking appliance (1) according to one of claims 13 or 14, **characterised in that** the draining device (21) extends inside the funnel (52) when the lid (50) is mounted on the draining support (30) and that the draining support (30) supports the cooking assembly (10).

16. Electrical cooking appliance (1) according to one of claims 1 to 15, **characterised in that** it comprises a stopper (60) provided to close the passage (51).

17. Electrical cooking appliance (1) according to claim 16, **characterised in that** the stopper (60) is mounted on the lid (50) to be movable between a draining position in which the passage (51) is free and a preservation position in which the passage (51) is blocked by the stopper (60).

18. Electrical cooking appliance (1) according to claim 17, **characterised in that** the stopper (60) is mounted to be pivoted on the lid (50).

19. Electrical cooking appliance (1) according to one of claims 17 or 18, **characterised in that** the stopper (60) is supported by the funnel (52).

20. Electrical cooking appliance (1) according to one of claims 17 to 19, **characterised in that** the lid (50) provides a housing (53) receiving the stopper (60) in the draining position when the lid (50) is mounted on the draining support (30) and when the draining support (30) supports the cooking assembly (10).
